# EUROPEAN PATENT APPLICATION

(11) **EP 2 929 787 A1**
(43) Date of publication of application: **14.10.2015**
(21) Application number: 13860889.8
(22) Date of filing: 03.12.2013
(51) Int. Cl.: A23L 1/29, A61K 9/48

(54) **FOOD COMPOSITION AND SOFT CAPSULE COMPRISING SAME**

(30) Priority: 04.12.2012 KR 20120139846; 29.11.2013 KR 20130147996
(71) Applicant: Samsung Fine Chemicals Co., Ltd., Ulsan-city 680-090 (KR)
(72) Inventor: CHA, Ja Hyun, Incheon 405-734 (KR); BAEK, Hyon Ho, Incheon 406-722 (KR); HONG, Jun Kee, Yongin-si Gyeonggi-do 448-728 (KR); LEE, Sung Wan, Incheon 402-060 (KR); KO, Won Hwa, Incheon 403-862 (KR)
(74) Representative: Kador & Partner
(86) International application number: PCT/KR2013/011082
(87) International publication number: WO 2014/088279

(57) **Abstract**

A food composition and a soft capsule including the same are disclosed. The disclosed food composition includes 100 parts by weight of a poorly water-soluble natural product, 400 to 8,000 parts by weight of an edible surfactant, 40 to 2,500 parts by weight of an edible cosurfactant, and 40 to 1,500 parts by weight of an edible oil, and has water dispersibility or water solubility.

## Description

### TECHNICAL FIELD

One or more embodiments of the present invention relate to food compositions and soft capsules including the same, and more particularly, to food compositions having excellent water dispersibility and water solubility, and soft capsules including the same.

### BACKGROUND ART

According to a recent global increase in health-oriented customers, the market of health functional food has continuously grown at a high annual average growth rate of about 6% for the last 5 years. Further, since there is rapidly increasing demand for health functional foods along with economic growth of newly industrialized countries, the health functional food market is considered to have a high potential. Unlike chemical pharmaceuticals, lots of functional natural products are intactly included in materials for such health functional foods. However, since such functional natural products are mostly poorly water-soluble and poorly absorbed in the body, the bioavailability thereof is low.

### DETAILED DESCRIPTION OF THE INVENTIVE CONCEPT

### TECHNICAL PROBLEM

One or more embodiments of the present invention provide food compositions having excellent water dispersibility and water solubility.

One or more embodiments of the present invention provide soft capsules including the food compositions.

### TECHNICAL SOLUTION

According to one or more embodiments of the present invention, a food composition includes: 100 parts by weight of a poorly water-soluble natural product; 400 parts by weight to 8,000 parts by weight of an edible surfactant; 40 parts by weight to 2,500 parts by weight of an edible cosurfactant; and 40 parts by weight to 1,500 parts by weight of an edible oil, wherein the food composition has water dispersibility or water solubility.

The poorly water-soluble natural product may include at least one poorly water-soluble natural polyphenol compound selected from the group consisting of curcumin, silymarin, and resveratrol.

The edible surfactant may include polysorbates.

The edible cosurfactant may include at least one compound selected from the group consisting of glycerol esters of fatty acids, propylene glycol, and propylene glycol esters of fatty acids.

The edible oil may include at least one selected from the group consisting of vegetable oils, refined fish-oils, and oils derived from marine algae.

The food composition may additionally include 500 parts by weight or less of an edible additive.

The edible additive may include at least one compound selected from the group consisting of lecithin, a viscosity controlling agent, a flavoring agent, a preservative, a coloring, glycerol, sorbitol, and gelatin.

According to one or more embodiments of the present invention, a soft capsule includes the food composition.

### ADVANTAGEOUS EFFECTS

A food composition according to the one or more of the above embodiments of the present invention has a merit of high bioavailability due to excellent water dispersibility or water solubility when the food composition is used in the field of soft capsules.

### DESCRIPTION OF THE DRAWINGS

FIGS. 1A to 1C are graphs showing dissolution rates of food compositions prepared in Examples 1 to 22 in water;
FIGS. 2A to 2C are graphs showing dissolution rates of the food compositions prepared in Examples 1 to 22 in a buffer solution of a pH value of 1.2;
FIGS. 3A to 3C are graphs showing dissolution rates of the food compositions prepared in Examples 1 to 22 in a buffer solution of a pH value of 6.8; and
FIGS. 4A to 4C are graphs showing PK test data for food compositions prepared in Examples 2, 13, 20 and 21 together with PK test data for three types of commercial food compositions and blank.

### BEST MODE

Hereinafter, a food composition according to one or more embodiments of the present invention is described in detail.

A food composition according to one or more embodiments of the present invention includes 100 parts by weight of a poorly water-soluble natural product, 400 parts by weight to 8,000 parts by weight of an edible surfactant, 40 parts by weight to 2,500 parts by weight of an edible cosurfactant, and 40 parts by weight to 1,500 parts by weight of an edible oil, and has water dispersibility or water solubility. In the present specifications, "edible" means sitologically allowable, "water dispersibility" means a nature in which the food composition exists in an emulsion state in water, and "water solubility" means a nature in which the food composition exists in a solution state in water.

The poorly water-soluble natural product may have a health enhancing function and/or a physiological function.

The poorly water-soluble natural product may include a poorly water-soluble natural polyphenol compound. Specifically, the poorly water-soluble natural polyphenol compound may include curcumin, silymarin, resveratrol, or combinations thereof. The curcumin may be derived from an extract of a turmeric (Curcuma longa) root, and the silymarin may be derived from an extract of milk thistle. Further, the silymarin may include silybin, isosilybin, silychristin, and silydianin.

The edible surfactant plays a role of improving water dispersibility or water solubility of the poorly water-soluble natural product.

The edible surfactant may include polysorbates. The polysorbates may be polysorbate 20, polysorbate 40, polysorbate 60, polysorbate 80, or combinations thereof.

When an amount of the edible surfactant is less than 400 parts by weight- based on 100 parts by weight- of the poorly water-soluble natural product, the poorly water-soluble natural product is not sufficiently dissolved in the food composition. When an amount of the edible surfactant is more than 8,000 parts by weight- based on 100 parts by weight- of the poorly water-soluble natural product, the food composition does not form micro-emulsions in water or an aqueous solution.

The edible cosurfactant plays a role of additionally improving water dispersibility or water solubility of the poorly water-soluble natural product.

The edible cosurfactant may include at least one compound selected from the group consisting of glycerol esters of fatty acids, propylene glycol, and propylene glycol esters of fatty acids. The glycerol esters of fatty acids may include glycerol dibehenate, glycerol monooleate, polyglycerol oleate, glyceryl palmitostearate, or combinations thereof. The propylene glycol esters of fatty acids may include propylene glycol monocaprylate, propylene glycol dicaprylocaprate, propylene glycol laurate, or combinations thereof. For instance, the edible cosurfactant may include Plurol® Oleique, CapryolTM PGMC, propylene glycol, or combinations thereof.

When the amount of the edible cosurfactant is outside the range of 40 parts by weight to 2,500 parts by weight based on 100 parts by weight of the poorly water-soluble natural product, the food composition may not form micro-emulsions or may form emulsion particles having large sizes in water or an aqueous solution to result in reduced absorption into the body and a lowered bioavailability.

When the glycerol esters of fatty acids are used as the edible cosurfactant, an amount of the glycerol esters of fatty acids may be 40 parts by weight to 1,500 parts by weight, e.g., 60 parts by weight to 1,000 parts by weight based on 100 parts by weight of the poorly water-soluble natural product. Further, when the propylene glycol esters of fatty acids are used as the edible cosurfactant, an amount of the propylene glycol esters of fatty acids may be 100 parts by weight to 2,500 parts by weight, e.g., 120 parts by weight to 2,000 parts by weight based on 100 parts by weight of the poorly water-soluble natural product.

The edible oil plays a role of additionally improving water dispersibility or water solubility of the poorly water-soluble natural product. Further, the edible oil may have a physiological function.

The edible oil may include at least one selected from the group consisting of vegetable oils, refined fish-oils, and oils derived from marine algae. For instance, the edible oil may include olive oil, MCT oil (medium chain triglyceride oil), fish oil, Ahi flower oil, Algae oil, or combinations thereof. The MCT oil may be refined, processed oils and fats as one type of vegetable oils and fats.

When the amount of the edible oil is outside the range of 40 parts by weight to 1,500 parts by weight based on 100 parts by weight of the poorly water-soluble natural product, the food composition does not form micro-emulsions in water or an aqueous solution.

The food composition may additionally include more than 0 parts by weight to not more than 500 parts by weight of edible additives based on 100 parts by weight of the poorly water-soluble natural product.

The edible additives may include at least one compound selected from the group consisting of lecithin, a viscosity controlling agent, a flavoring agent, a preservative, a coloring, glycerol, sorbitol, and gelatin.

The viscosity controlling agent may include a water-soluble polymer such as polyvinylpyrrolidone to increase dispersibility and absorptiveness of solid matters.

The flavoring agent may include ethers, esters, ketones, fatty acids, phenols, aromatic alcohols, or combinations thereof. For instance, the flavoring agent may include geranyl formate, citronellyl formate, isoamyl formate, cinnamic acid, or combinations thereof.

The preservative may include dehydroacetic acids, sorbic acids, benzoic acids, propionic acids, or combinations thereof. For instance, the preservative may include: synthetic additives such as dibutyl hydroxyl toluene or butylhydroxyanisole; natural additives such as D-tocopherol or defatted ricebran extract; or combinations thereof.

The coloring may include: natural colorings such as turmeric, saffron, or green chlorophyll; artificial colorings such as edible food coloring green No. 3, edible food coloring red No. 3 or edible food coloring yellow No. 5 which are registered as food additives; or combinations thereof.

The food composition is emulsified within a short period of time under gastric juice conditions having a pH value of 1.2 and under small intestinal juice conditions having a pH value of 6.8 so that active ingredients in the poorly water-soluble natural product are absorbed into the body within several minutes. Therefore, the food composition may maximize bioavailability of the poorly water-soluble natural product.

A soft capsule including the food composition according to one or more embodiments of the present invention is provided. The soft capsule may be manufactured by methods that are well-known in the art.

The soft capsule may additionally include an ordinary excipient for food in addition to the food composition.

Hereinafter, although the present invention is described more in detail through Examples, the present invention is not limited to such Examples.

### MODE OF THE INVENTIVE CONCEPT

### Examples

### Examples 1 to 22: Preparation of food compositions

First, an edible surfactant, an edible cosurfactant, and an edible oil was uniformly mixed at the ratio as recorded in Tables 1 to 3 below. As a result, a first mixture was obtained. Thereafter, a poorly water-soluble natural product was added to the first mixture at the ratio as recorded in Tables 1 to 3 below. As a result, a second mixture was obtained. Thereafter, the second mixture was uniformly mixed to sufficiently dissolve the poorly water-soluble natural product in the second mixture. As a result, 18 food compositions were obtained. Respective numerical values recorded in Tables 1 to 3 are contents, and units of the contents are parts by weight. In Tables 1 to 3 below, curcumin, silymarin, and resveratrol are products produced by Naturex SA of France, Polysorbate 80 is EMASOL O-120V produced by KAO Chemicals of Japan, Plurol® Oleique as a brand name of polyglyceryl-3 dioleate is a product produced by Gattefosse Co. of France, CapryolTM PGMC as a brand name of Propylene glycol monocaprylate(type I) is a product produced by Gattefosse Co. of France, olive oil is a product produced by Borges extra virgin of Spain, fish oil, which is in the form of ethyl ester, is a product produced by NeoMega of the Republic of Korea, Ahi flower oil as a vegetable oil is a product produced by TCI of USA, and algae oil as an oil extracted from marine algae is a product produced by NeoMega of the Republic of Korea.

**[Table 1]**

| Classification | Ingredients | Examples | | | | | | |
|---|---|---|---|---|---|---|---|---|
| | | 1 | 2 | 3 | 4 | 13 | 14 | 19 |
| Poorly water-soluble natural product | Curcumin | 4.8 | 4.8 | 4.8 | 4.8 | 4.8 | 4.8 | 7.3 |
| Edible surfactant | Polysorbate 80 | 76.2 | 76.2 | 66.7 | 66.7 | 76.2 | 76.2 | 45.8 |
| Edible cosurfactant | Plurol® Oleique | 9.5 | 9.5 | 0 | 0 | 9.5 | 9.5 | 9.2 |
| | CapryolTM PGMC | 0 | 0 | 19.0 | 19.0 | 0 | 0 | 9.2 |
| | Propylene glycol | 0 | 0 | 0 | 0 | 0 | 0 | 0.9 |
| Edible oil | Olive oil | 9.5 | 0 | 9.5 | 0 | 0 | 0 | 0 |
| | Fish oil | 0 | 9.5 | 0 | 9.5 | 0 | 0 | 0 |
| | MCT oil | 0 | 0 | 0 | 0 | 0 | 0 | 27.5 |
| | Ahi flower oil | 0 | 0 | 0 | 0 | 9.5 | 0 | 0 |
| | Algae oil | 0 | 0 | 0 | 0 | 0 | 9.5 | 0 |

**[Table 2]**

| Classification | Ingredients | Examples | | | | | | | |
|---|---|---|---|---|---|---|---|---|---|
| | | 5 | 6 | 7 | 8 | 15 | 16 | 20 | 21 |
| Poorly water-soluble natural product | silymarin | 11.6 | 11.6 | 9.1 | 9.1 | 11.6 | 11.6 | 10.7 | 10.6 |
| Edible surfactant | Polysorbate 80 | 70.8 | 70.8 | 63.6 | 63.6 | 70.8 | 70.8 | 40.2 | 44.2 |
| Edible cosurfactant | Plurol@ Oleique | 8.8 | 8.8 | 0 | 0 | 8.8 | 8.8 | 46.9 | 8.8 |
| | CapryolTM PGMC | 0 | 0 | 18.2 | 18.2 | 0 | 0 | 0 | 8.8 |
| | Propylene glycol | 0 | 0 | 0 | 0 | 0 | 0 | 0 | 0.9 |
| Edible oil | Olive oil | 8.8 | 0 | 9.1 | 0 | 0 | 0 | 2.2 | 0 |
| | Fish oil | 0 | 8.8 | 0 | 9.1 | 0 | 0 | 0 | 0 |
| | MCT oil | 0 | 0 | 0 | 0 | 0 | 0 | 0 | 26.5 |
| | Ahi flower oil | 0 | 0 | 0 | 0 | 8.8 | 0 | 0 | 0 |
| | Algae oil | 0 | 0 | 0 | 0 | 0 | 8.8 | 0 | 0 |

**[Table 3]**

| Classification | Ingredients | Examples | | | | | | |
|---|---|---|---|---|---|---|---|---|
| | | 9 | 10 | 11 | 12 | 17 | 18 | 22 |
| Poorly water-soluble natural product | resveratrol | 7.4 | 7.4 | 7.4 | 7.4 | 7.4 | 7.4 | 5.6 |
| Edible surfactant | Polysorbate 80 | 64.8 | 64.8 | 74.0 | 74.0 | 74.0 | 74.0 | 46.6 |
| Edible cosurfactant | Plurol® Oleique | 0 | 0 | 9.3 | 9.3 | 9.3 | 9.3 | 9.3 |
| | CapryolTM PGMC | 18.5 | 18.5 | 0 | 0 | 0 | 0 | 9.3 |
| | Propylene glycol | 0 | 0 | 0 | 0 | 0 | 0 | 0.9 |
| Edible oil | Olive oil | 9.3 | 0 | 9.3 | 0 | 0 | 0 | 0 |
| | Fish oil | 0 | 9.3 | 0 | 9.3 | 0 | 0 | 0 |
| | MCT oil | 0 | 0 | 0 | 0 | 0 | 0 | 28 |
| | Ahi flower oil | 0 | 0 | 0 | 0 | 9.3 | 0 | 0 |
| | Algae oil | 0 | 0 | 0 | 0 | 0 | 9.3 | 0 |

### Evaluation Examples

### Evaluation Example 1: Evaluation of particle sizes of emulsions

1 g of each of food compositions prepared in Examples 1 to 22 was injected into 200 mL of a dispersion medium and mixed with the dispersion medium to form a emulsion. After forming the emulsion, the formed emulsion was diluted 1,000 times with water to obtain a diluted solution. Particle sizes of the emulsion in the diluted solution, i.e., particle sizes of the poorly water-soluble natural product were measured by using Zetasizer Nano ZS manufactured by Malvern Instrument of the United Kingdom. The particle sizes were repeatedly measured on the same diluted solution sample three times to obtain average values so that the average values were represented in Tables 4 to 6 below. The numerical values recorded in Tables 4 to 6 below indicate particle sizes of the emulsion, and units of the numerical values are nm. A buffer solution having a pH value of 1.2 is an aqueous hydrochloric acid solution, and a buffer solution having a pH value of 6.8 is an aqueous phosphoric acid solution.

**[Table 4]**

| | | Examples | | | | | | |
|---|---|---|---|---|---|---|---|---|
| Poorly water-soluble natural product | Dispersion medium | 1 | 2 | 3 | 4 | 13 | 14 | 19 |
| Curcumin | water | 7.0 ± 0.2 | 20.2 ± 1.0 | 26.5 ± 8.4 | 8.3 ± 0.1 | 8.4 ± 0.9 | 7.7 ± 0.1 | 34.3 ± 0.9 |
| | Buffer solution with a pH value of 1.2 | 8.0 ± 0.3 | 22.8 ± 1.1 | 27.1 ± 0.3 | 8.4 ± 0.4 | 8.9 ± 0.3 | 7.9 ± 0.3 | 41.2 ± 0.2 |
| | Buffer solution with a pH value of 6.8 | 8.2 ± 0.1 | 19.8 ± 1.0 | 25.0 ± 0.9 | 8.6 ± 0.3 | 9.1 ± 0.2 | 8.3 ± 0.3 | 31.0 ± 0.8 |

**[Table 5]**

| | | Examples | | | | | | | |
|---|---|---|---|---|---|---|---|---|---|
| Poorly water-soluble natural product | Dispersion medium | 5 | 6 | 7 | 8 | 15 | 16 | 20 | 21 |
| silymarin | water | 69.2 ± 1.0 | 98.9 ± 2 5.9 | 21.2 ± 8.1 | 8.1 ± 0.5 | 8.3 ± 0.1 | 9.1 ± 1.7 | 188.1 ± 12.3 | 97.3 ± 2.0 |
| | Buffer solution with a pH value of 1.2 | 100.3 ± 3.3 | 140.8 ± 1.0 | 34.7 ± 0.9 | 8.4 ± 0.3 | 9.1 ± 0.2 | 8.4 ± 0.3 | 218.3 ± 53.4 | 102.4 ± 4.9 |
| | Buffer solution with a pH value of 6.8 | 98.7 ± 0.7 | 129.2 ± 0.7 | 29.3 ± 0.8 | 8.2 ± 0.1 | 8.6 ± 0.2 | 8.6 ± 0.2 | 303.7 ± 73.3 | 109.9 ± 20.4 |

**[Table 6]**

| | | Examples | | | | | | |
|---|---|---|---|---|---|---|---|---|
| Poorly water-soluble natural product | Dispersion medium | 9 | 10 | 11 | 12 | 17 | 18 | 22 |
| resveratrol | water | 8.0±0.0 | 69.7±2.5 | 87.6±4.0 | 7.3±0.1 | 9.2±0.6 | 10.0±0.7 | 20.9±0.9 |
| | Buffer solution with a pH value of 1.2 | 8.9±0.0 | 83.0±2.5 | 107.6±2.9 | 7.8±0.3 | 10.1±0.2 | 9.0±0.3 | 24.3±0.8 |
| | Buffer solution with a pH value of 6.8 | 9.1±0.1 | 78.9±3.0 | 101.6±3.7 | 8.6±0.4 | 10.0±0.5 | 10.5±0.8 | 37.8±0.1 |

Referring to Tables 4 to 6 above, food compositions prepared in Examples 1 to 22 are shown to form nanometer- or micrometer-sized emulsions in water, a buffer solution having a pH value of 1.2 as a gastric juice condition, or a buffer solution having a pH value of 6.8 as a small intestinal juice condition. It may be easily estimated that, if the respective food compositions are orally fed, the food compositions are absorbed well into the body to result in high bioavailability. For reference, the bioavailability is increased since, the smaller sizes of the formed emulsions are, the more effectively absorption is conducted in a gastrointestinal tract membrane, and the food compositions are maintained in a structurally stabilized state at the same time.

### Evaluation Example 2: Evaluation of dissolution velocities and dissolution rates

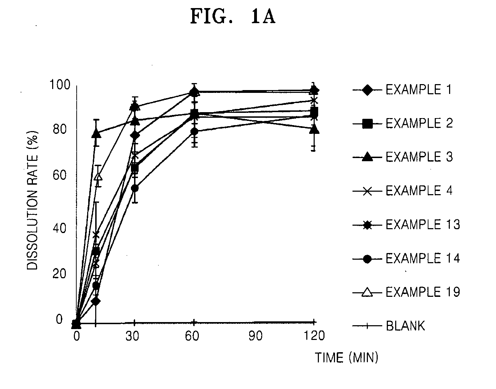

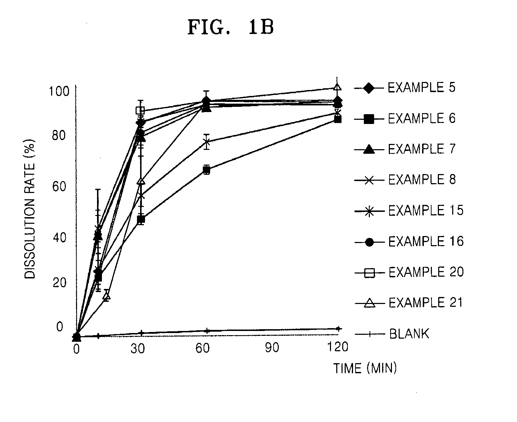

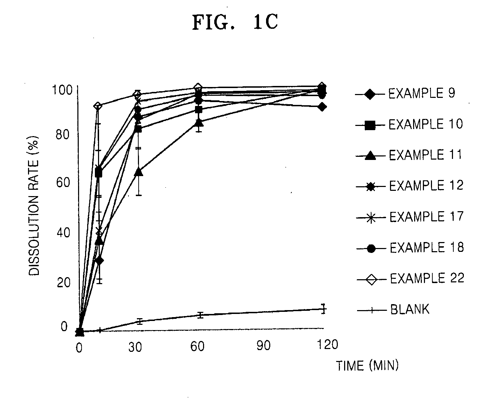

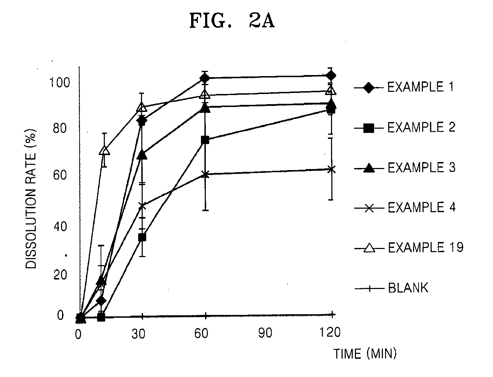

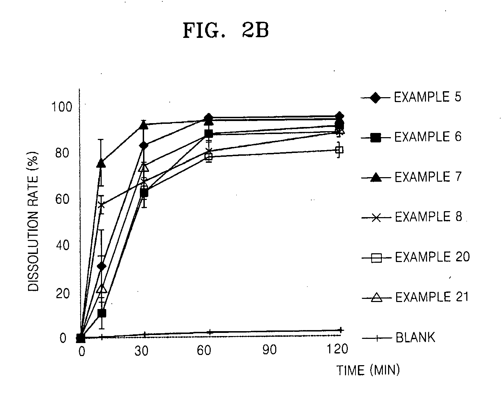

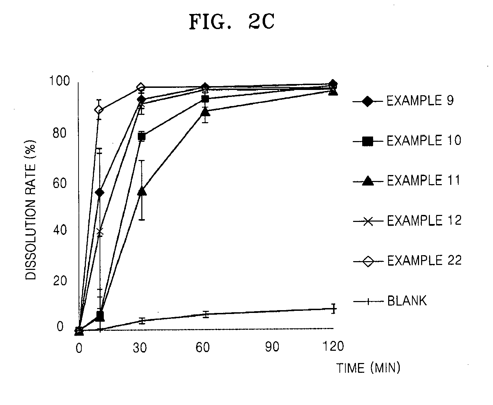

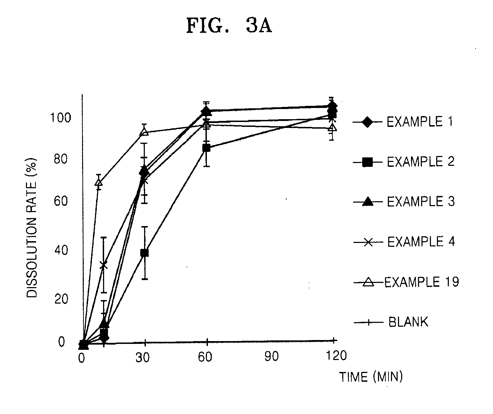

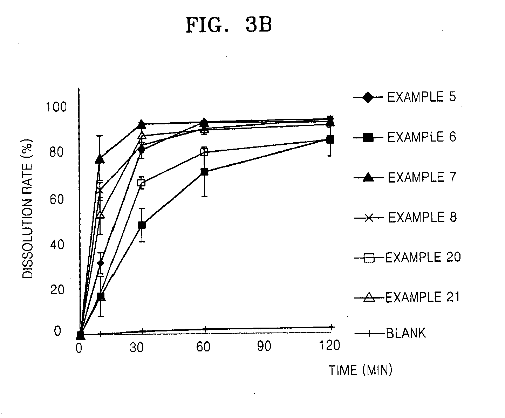

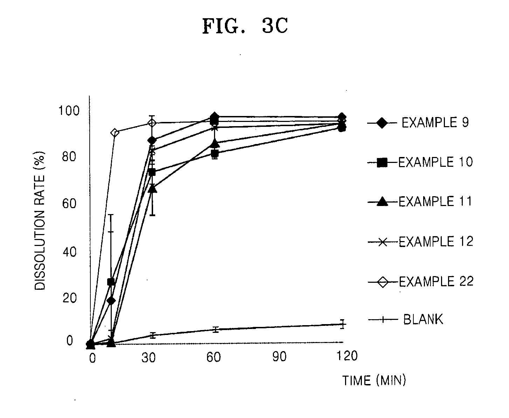

After each of the food compositions that had been prepared in Examples 1 to 22 was charged into a capsule of size No. 0, a dissolution test was performed on the capsule using a paddle method in accordance with the USP 35 dissolution regulation. Here, the dissolution test means a test of examining a degree of solubilization of physiological functional materials such as drug injected into the dispersion medium after injecting a formulation such as a tablet or a capsule into a dispersion medium so that the formulation is disintegrated into the dispersion medium. Specifically, a dissolution rate of 50% means that 50% of poorly water-soluble natural products included in the respective food compositions had been solubilized so that the emulsion was formed. The dissolution tests were performed for two hours by maintaining a paddle speed to 50 rpm, using 900 ml of a dispersion medium as a dissolution medium, and setting a temperature to 37 ± 0.5 °C. The dispersion medium was water illustrated in FIGS. 1A to 1C, a buffer solution having a pH value of 1.2 illustrated in FIGS. 2A to 2C, or a buffer solution having a pH value of 6.8 illustrated in FIGS. 3A to 3C. After the respective formulations were disintegrated, the dispersion medium containing the poorly water-soluble natural products that had been solubilized in the dispersion medium was intermittently collected by Autosampler so that concentrations of the poorly water-soluble natural products were analyzed by liquid chromatography. Thereafter, dissolution rates were calculated from the concentrations of the poorly water-soluble natural products in accordance with the USP 35 dissolution regulation. As a result, obtained dissolution rates were respectively illustrated in FIGS. 1A to 1C, FIGS. 2A to 2C, and FIGS. 3A to 3C. "Blank" in each of the drawings means a test result of the poorly water-soluble natural product itself (that is, in which nothing had been added) used in each of Examples indicated in the drawings. The dissolution rates have a unit of weight percent (wt%) in FIGS. 1A to 1C, FIGS. 2A to 2C, and FIGS. 3A to 3C.

Referring to the drawings, the food compositions prepared in Examples 1 to 22 represented very high dissolution velocities and dissolution rates compared to a poorly water-soluble food composition itself (that is, blank).

### Evaluation Example 3: pharmacokinetic (PK) test

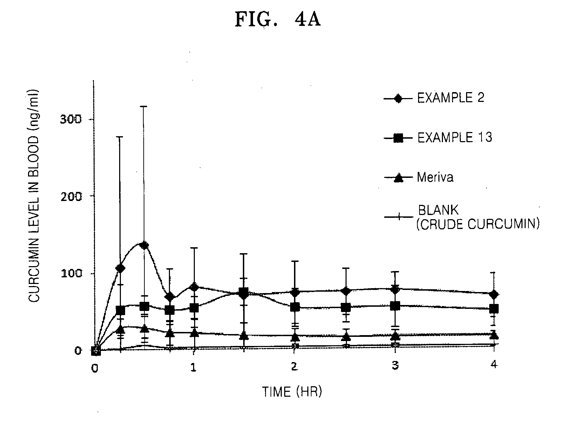

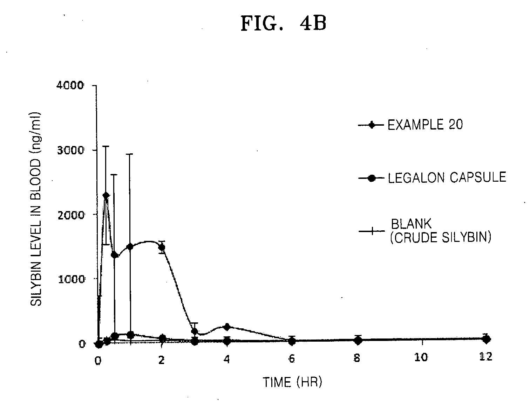

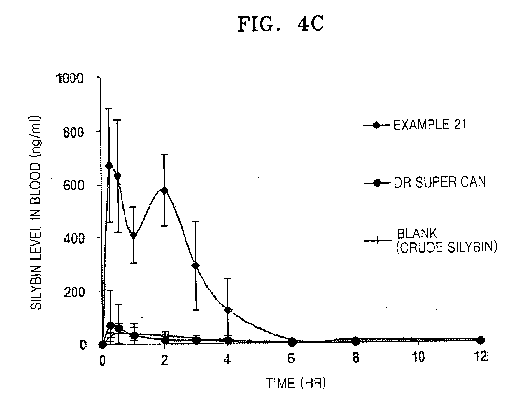

After food compositions prepared in Examples 2, 13, 20, and 21 and a commercially available food composition was orally administrated into Sprague Dawley male rats, in vivo absorption rates of the respective food compositions and the commercially available food composition in the Sprague Dawley male rats were evaluated to obtain evaluation results represented in Tables 7 to 9 below and FIGS. 4A to 4C. Six rats were used per one type of food compositions, blood samples were collected for 4 hours in tests using at least curcumin, and blood samples were collected for 12 hours in tests using at least silymarin. Amounts of curcumin or silybin contained in the blood samples were measured using LC-MS. Only easily measurable contents of silybin instead of the total content of silymarin were measured so that in vivo absorption rates of the entire silymarin were indirectly evaluated. Here, "blank" means curcumin or silymarin (i.e., silybin) itself (that is, in which nothing had been added) used in Examples indicated in Tables 7 to 9 below and FIGS. 4A to 4C .

**[Table 7]**

| | Contents of curcumin in blood samples (ng/ml) | | | | | | | | |
|---|---|---|---|---|---|---|---|---|---|
| | 0 hour | 0.5 hour | 0.75 hour | 1 hour | 1.5 hour | 2 hours | 2.5 hours | 3 hours | 4 hours |
| Example 2 | 106.5 | 136.8 | 69.5 | 81.1 | 70.5 | 73.4 | 74.4 | 75.9 | 68.6 |
| Example 13 | 52.5 | 57.7 | 51.9 | 55.0 | 74.7 | 54.4 | 53.5 | 54.6 | 49.0 |
| Meriva* | 28.2 | 28.6 | 22.8 | 21.9 | 18.2 | 16.4 | 15.4 | 15.7 | 16.0 |
| Blank | 1.7 | 6.0 | 2.0 | 2.9 | 3.0 | 3.3 | 3.3 | 3.7 | 3.1 |

| | | | | | | | | | |
|---|---|---|---|---|---|---|---|---|---|
| *Meriva: a product produced by Indena S.P.A Company of Italy (a product produced by applying phytosome technology to curcumin) | | | | | | | | | |

**[Table 8]**

| | Contents of silybin in blood samples (ng/ml) | | | | | | | | | |
|---|---|---|---|---|---|---|---|---|---|---|
| | 0 hour | 0.25 hour | 0.5 hour | 1 hour | 2 hours | 3 hours | 4 hours | 6 hours | 8 hours | 12 hours |
| Example 20 | 0.0 | 1969.3 | 918.7 | 753.2 | 659.5 | 185.1 | 242.0 | 22.9 | 19.9 | 12.4 |
| Legalon capsule** | 0.0 | 37.2 | 103.2 | 114.6 | 56.5 | 27.7 | 21.0 | 8.0 | 8.0 | 4.5 |
| Blank | 0.0 | 56.0 | 59.1 | 33.5 | 31.6 | 21.4 | 13.5 | 5.7 | 4.3 | 0.8 |

| | | | | | | | | | | |
|---|---|---|---|---|---|---|---|---|---|---|
| **Legalon capsule: Legalon capsule 140 produced by Bukwang pharmaceutical Co., Ltd | | | | | | | | | | |

**[Table 9]**

| | Contents of silybin in blood samples (ng/ml) | | | | | | | | | |
|---|---|---|---|---|---|---|---|---|---|---|
| | 0 hour | 0.25 hour | 0.5 hour | 1 hour | 2 hours | 3 hours | 4 hours | 6 hours | 8 hours | 12 hours |
| Example 21 | 0.0 | 673.1 | 633.2 | 412.0 | 579.6 | 294.4 | 126.9 | 10.7 | 9.6 | 5.1 |
| Dr super can*** | 0.0 | 72.8 | 63.9 | 34.9 | 16.1 | 12.4 | 11.8 | 0.0 | 1.0 | 0.0 |
| Blank | 0.0 | 28.9 | 43.5 | 40.8 | 32.8 | 19.4 | 8.6 | 1.6 | 0.9 | 0.0 |

| | | | | | | | | | | |
|---|---|---|---|---|---|---|---|---|---|---|
| ***Dr super can: a product produced by Cosmaxbio Corporation | | | | | | | | | | |

Referring to Tables 7 to 9 above, the food compositions prepared in Examples 2, 13, 20, and 21 had higher in vivo absorption rates in the rats than that of the commercially available food composition or the poorly water-soluble natural product itself (by a factor of about 5 to 20).

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A food composition comprising:
100 parts by weight of a poorly water-soluble natural product;
400 parts by weight to 8,000 parts by weight of an edible surfactant;
40 parts by weight to 2,500 parts by weight of an edible cosurfactant; and
40 parts by weight to 1,500 parts by weight of an edible oil,
wherein the food composition has water dispersibility or water solubility.

2. The food composition of claim 1, wherein the poorly water-soluble natural product comprises at least one poorly water-soluble natural polyphenol compound selected from the group consisting of curcumin, silymarin, and resveratrol.

3. The food composition of claim 1, wherein the edible surfactant comprises polysorbates.

4. The food composition of claim 1, wherein the edible cosurfactant comprises at least one compound selected from the group consisting of glycerol esters of fatty acids, propyleneglycol, propylene glycol esters of fatty acids, and medium chain triglycerides.

5. The food composition of claim 1, wherein the edible oil comprises at least one selected from the group consisting of vegetable oils, refined fish-oils, and oils derived from marine algae.

6. The food composition of claim 1, further comprising not more than 500 parts by weight of an edible additive.

7. The food composition of claim 6, wherein the edible additive comprises at least one compound selected from the group consisting of lecithin, a viscosity controlling agent, a flavoring agent, a preservative, coloring, glycerol, sorbitol, and gelatin.

8. A soft capsule comprising the food composition of any one of claims 1 to 7.
